# EUROPEAN PATENT APPLICATION

(11) **EP 4 653 995 A1**
(43) Date of publication of application: **26.11.2025**
(21) Application number: 24177788.7
(22) Date of filing: 23.05.2024
(51) Int. Cl.: G06F 3/04847, G06F 3/0482, G06F 3/04842, G06F 3/0486, G06F 3/04886, A62B 18/02

(54) **WIRELESS DEVICE CONTROL**

(71) Applicant: Dräger Safety AG & Co. KGaA, 23560 Lübeck (DE)
(72) Inventor: VARDY, Thomas Eric, NE28 0QB North Tyneside (GB); BARNES, Matthew, NE61 2QP Morpeth (GB)
(74) Representative: Haseltine Lake Kempner LLP

(57) **Abstract**

There is disclosed a method for controlling a wireless device of a network, wherein the wireless device comprises a touch screen interface the method comprising: generating a first output on the touch screen interface, wherein the first output comprises a first area of the touch screen interface, and wherein the first area comprises a representation of a group of one or more breathing apparatus; obtaining first information indicative of a state of the group; and configuring the first area of the touch screen interface based on the first information, wherein configuring the first area comprises: if the first information is indicative that the state of the group meets a first criterion, configuring the first area in a locked mode, wherein alteration of the first area via the touch screen interface is prevented in the locked mode. Also disclosed is a wireless device and a computer program product.

## Description

### Technical Field

This disclosure relates to methods for controlling a wireless device of a network, and a wireless device configured to operate in accordance with those methods.

### Background

Emergency services (e.g., fire services) are organisations that ensure public safety, security, and health by addressing and resolving different emergencies. As such, emergency services require every advantage possible when responding to emergencies. This is especially true as emergency services are required to respond to increasingly complex emergencies. Indeed, an emergency response incident can involve many individuals, including both responders and members of the public, and responders are commonly equipped with specialised equipment which must be carefully monitored and maintained in order to provide safety for the responders. For example, fire services regularly deal with toxic environments created by combustible materials, resulting in smoke, oxygen deficiency, elevated temperatures, poisonous atmospheres, and violent air flows. To combat some of these risks, firefighters carry breathing apparatus (BA). The proper management of such specialised equipment can mean the difference between a successful incident outcome and disaster.

Moreover, emergency services must be ready to adapt to an array of different environments (e.g. both natural and man-made), which cause further challenges with organising and effectively dealing with an incident. As such, ineffective management of such incidents can cause serious harm to the public and result in irreparable damage to infrastructure.

An entry control office (ECO) will generally be responsible for managing the activities of each fire fighter responding to an emergency. The ECO will generally keep a record of the current state of each firefighter or group of firefighters to ensure their safety. For example, the ECO may record that a group of firefighters has begun responding to an emergency incident or that a group of firefighters have recently evacuated from an emergency incident. It will be appreciated that these records must accurately reflect the current state of all firefighters, otherwise the recorded and true states may differ - potentially leading to the ECO being unable to safely manage the incident. As such, safe and efficient handling of the incident is key to ensure the wellbeing of personnel (e.g. firefighters) deployed at the incident, and for the success of heir deployment.

In the past, emergency services (e.g. fire services) have relied on analogue tools to monitor and control the handling of emergency response incidents. For example, an entry control operative (ECO) will commonly use a physical board (e.g. an entry control board (ECB)) for keeping track of fire fighters deployed at an incident (e.g. a building fire). In recent years, some emergency services have adopted more sophisticated technology which provides improved functionality. However, there are challenges associated with such techniques. Indeed, given the nature of the use of such technology, it must be ensured that ease of use is complemented by strong safety measures. After all, the primary objective for handling an emergency incident is the safety of those involved in the incident. Therefore, improvements to existing methods for handling information associated with emergency incidents are desired.

### Summary

As mentioned above, there are challenges associated with ensuring safety for techniques which involve the handling of personnel at an (e.g. emergency response) incident. Indeed, it is desirable to provide a technique which allows for an incident to be handled expeditiously while also safeguarding the safety and wellbeing of those involved in the incident.

Therefore, according to an aspect of the disclosure, there is provide a method for controlling a wireless device of a network. The wireless device comprises a touch screen interface. The method comprises generating a first output on the touch screen interface. The first output comprises a first area of the touch screen interface, and the first area comprises a representation of a group of one or more breathing apparatus. The method also comprises obtaining first information indicative of a state of the group, and configuring the first area of the touch screen interface based on the first information. Configuring the first area comprises: if the first information is indicative that the state of the group meets a first criterion, configuring the first area in a locked mode. Alteration of the first area via the touch screen interface is prevented in the locked mode.

The first output on the touch screen interface can be a graphical user interface (GUI) comprising one or more (e.g., distinct) areas.

In some examples, configuring the first area may comprise, if the first information is indicative that the state of the group does not meet the first criterion, configuring the first area in an unlocked mode. Alteration of the first area via the touch screen interface is enabled in the unlocked mode.

In some examples, alteration of the first area via the touch screen interface may comprise altering the representation of the group of one or more breathing apparatus comprised in the first area.

In some examples, altering the representation of the group of one or more breathing apparatus comprised in the first area may comprise: altering a number of one or more user blocks comprised in the first area. Each user block of the one or more user blocks can correspond to a breathing apparatus of the group of one or more breathing apparatus.

In some examples, the state of the group may correspond to a standby state of the group; a finished state of the group; or an active state of the group.

In some examples, the first criterion may not be met if the state of the group corresponds to the standby state; or the finished state.

In some examples, the first criterion may be met if the state of the group corresponds to the active state. In some examples, the first output and/or the first area may display a representation of the state of the group.

In some examples, obtaining the first information may comprise obtaining the first information from a user input received via the touch screen interface.

In some examples, the method may comprise generating a second output on the touch screen interface. The second output can be indicative of the mode of the first area.

In some examples, if the first area is configured in the locked mode, generating the second output may comprise, in response to receiving a touch screen interface input associated with the first area, generating a notification indicative that the first area is configured in the locked mode.

In some examples, the method may comprise initiating transmission of the first information towards a node of the network.

In some examples, the node may be configured to operate as a transceiver between the wireless device and the one or more breathing apparatus.

In some examples, the one or more breathing apparatus may be deployed at an emergency response incident. Alternatively, or in addition, in some examples, the wireless device may be deployed at the emergency response incident.

According to another aspect of the disclosure, there is provided a wireless device comprising a touch screen interface; and processing circuitry configured to operate in accordance with the method described herein.

The wireless device may comprise a memory configured to store one or more instructions which may be executed by the processing circuitry to cause the processing circuitry to operate in accordance with the method described herein.

The processing circuitry may comprise a processor. In some examples, the wireless device may be a tablet computer.

According to another aspect of the disclosure, there is provided a computer program product, embodied on a non-transitory machine-readable medium, comprising instructions which are executable by processing circuitry to cause the processing circuitry to perform the method described herein.

Thus, in the manner described herein, improved techniques for controlling a wireless device are provided. Advantageously, a first area of a touch screen interface of the wireless device is configured based on first information indicative of a state of a group of one or more breathing apparatus. In more detail, if the first information is indicative that the state of the group meets a first criterion, the first area is configured in a locked mode in which alteration of the first area, via the touch screen interface, is prevented. As such, the configuration of the touch screen interface is dependent on the state of the group of one or more breathing apparatus. As such, the wireless device advantageously prohibits certain functionality in response to a state of the group meeting the first criterion. This is especially useful in an emergency response incident scenario, since a user of the wireless device is prevented from interfering with a group of one or more breathing apparatus while the group is in a specific (e.g. active incident) state.

### Brief Description of the Drawings

Arrangements of the invention will now be described, by way of example, and with reference to the accompanying drawings, in which:
Figure 1 shows a schematic illustration of a wireless device according to an embodiment;
Figure 2 shows a schematic illustration of a system according to an embodiment;
Figure 3 shows a block diagram of a method performed according to an embodiment;
Figures 4A-4E show block diagrams illustrating a method performed according to some embodiments; and
Figure 5 shows a flow chart illustrating process steps in an example of a method for controlling a wireless device.

### Detailed Description of the Drawings

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

As mentioned above, there is provided herein methods for controlling a wireless device of a network.

As such, the methods described herein can be performed by a wireless device. The wireless device may be any type of wireless device. More specifically, the wireless device referred to herein may be any device configured to communicate wirelessly with one or more other entities (e.g., of the network referred to herein, such as the network node referred to herein). For example, the wireless device may be a user equipment (UE). The wireless device referred to herein can include, but is not limited to, a smart device such as a smartphone or a tablet. The wireless device can be configured to run an application (or "app") which, for example, enables the wireless device to communicate with the network node. The application may provide a user of the wireless device (e.g., an entry control officer, "ECO") with the ability to manage, control, and/or coordinate an emergency response, and in particular to monitor the status of BA and/or users of the BA involved in an incident as described herein. The wireless device may be configured to enable the user to create, edit and/or view emergency response information. For example, the wireless device may be configured to enable the user of the wireless device to view representations of one or more BAs of the network (e.g., deployed in an emergency response). The wireless device may enable the user to assign representations of one or more BA to groups which are shown by the wireless device.

Some examples of the methods referred to herein involve a network node. The network node referred to herein may be any type of network node. More specifically, the network node may be a base station of the network described herein. The network node referred to herein may be configured to route communications between the wireless device referred to herein and the one or more BA referred to herein. In this way, the network node may be understood to behave as a transceiver. Herein, the network node can be any entity of the network which is configured to act as a transceiver between the wireless device and the one or more BA. Thus, in some examples, the network node referred to herein may be configured to operate as a repeater device between different entities of the network referred to herein. The network node may additionally or alternatively be configured to operate as a range extender device. The network node referred to herein can be configured to receive communications from the wireless device and/or the one or more BA. The network node referred to herein can be configured to initiate transmission of information towards the wireless device and/or the one or more BA. The network node can be referred to herein as a "hub" or a "base station" (e.g., of the network). The network node can comprise a memory configured to store data transmitted by the wireless device and/or the one or more BA.

The one or more BA referred to herein may comprise any type of BA. More specifically, a BA as referred to herein may be any type of apparatus (e.g., device) which is worn by a wearer (user) of the BA in order to provide a supply of breathable gas (e.g., air) to the wearer. As such, a BA can be advantageously utilised in an atmosphere that is immediately dangerous to life or health. In an example, the one or more BA referred to herein may comprise a self-contained breathing apparatus (SCBA) and/or a compressed air breathing apparatus (CABA). The one or more BA referred to herein may comprise a closed-circuit BA. Alternatively, the one or more BA referred to herein may comprise an open-circuit BA. The one or more BA referred to herein may comprise a lung demand regulator, a face mask, a compressed breathing gas tank, a control system, a first stage breathing circuit, a second stage breathing circuit, and/or a support frame, or any combination thereof. The one or more BA referred to herein may comprise an electrical system (e.g., a telemetry system). The electrical system may be configured to communicate with the wireless device using the network referred to herein (e.g., via the network node referred to herein). Thus, in some examples, at least one of the one or more BA may be of the network referred to herein. In some examples, each BA of the one or more BA may be of the network. At least one BA of the one or more BA referred to herein may be configured to transmit (e.g. send) information indicative of a status of the at least one BA towards the wireless device. Thus, in some examples, the wireless device can receive information indicative of a status of some or all of the one or more BA. The information indicative of a status of the at least one BA may comprise, for example, information indicative of a (e.g. breathable air) pressure status of the at least one BA. The one or more BA referred to herein may not comprise an electrical system or may comprise an electrical system not configured to communicate with the wireless device via the network node. It will be appreciated that the methods described herein is applicable to any type of BA. In some examples, a BA as referred to herein may be worn by a firefighter.

The techniques described herein can be used in respect of any network, such as any communications or telecommunications network, e.g., cellular network. In some examples, the network referred to herein may be a radio network. For example, the network referred to herein may be a 2.4GHz radio network. In some examples, the network may comprise a Wi-Fi network (e.g., based on the Institute of Electrical and Electronics Engineers (IEEE) 802.11 family of standards). Alternatively, or in addition, the network may comprise a Bluetooth network (e.g., based on the IEEE 802.15.1 family of standards). Any one or more of the one or more BA referred to herein, the wireless device referred to herein, and the network node referred to herein may communicate (e.g., directly, or indirectly) via the network described herein.

In some examples, the one more BA referred to herein may be deployed at an incident. The incident may be an emergency response incident. An emergency response incident, as referred to herein, may be any type of emergency response incident. More specifically, an emergency response incident may be any incident which involves the addressing and/or resolving of an emergency. An emergency, as referred to herein, can be an urgent, unexpected and/or dangerous incident that poses an immediate risk to health, life, property and/or environment. An emergency may require urgent intervention to prevent a worsening of the incident. Examples of the emergencies referred to herein include, but are not limited to, emergencies which pose a danger to life, a danger to health, and/or a danger to the environment. For example, the emergency response incident referred to herein may include a fire related incident (e.g., a building fire, a forest fire, a car fire, etc.). Alternatively, or in addition, the emergency response incident referred to herein may involve hazardous material operations (e.g., dealing with substances which are a risk to health, safety, property, and/or the environment).

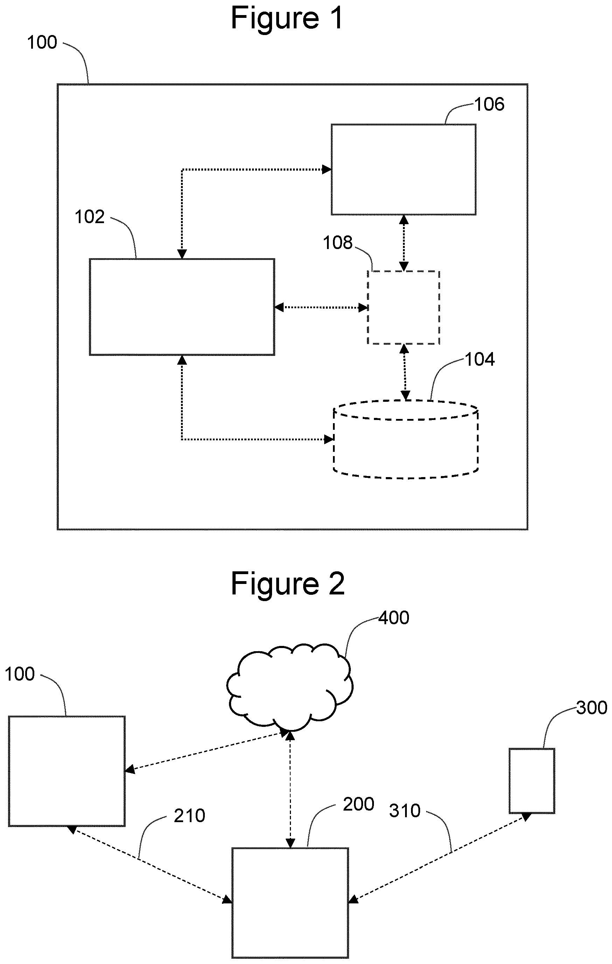

**Figure 1** illustrates a wireless device 100 according to an embodiment. The wireless device 100 can be used for monitoring an (e.g. emergency response) incident and/or for organising and/or monitoring one or more BA deployed at the incident. The wireless device 100 may be a tablet device, a smartphone device, a laptop device, or any device comprising a touch screen interface.

As illustrated in Figure 1, the wireless device 100 comprises processing circuitry (or logic) 102. The processing circuitry 102 controls the operation of the wireless device 100 and can implement the method described herein in respect of the wireless device 100. The processing circuitry 102 can be configured or programmed to control the wireless device 100 in the manner described herein.

The processing circuitry 102 can comprise one or more hardware components, such as one or more processors (e.g., one or more microprocessors, one or more multi-core processors, and/or one or more digital signal processors (DSPs)), one or more processing units, one or more processing modules, and/or one or more controllers (e.g., one or more microcontrollers). The one or more hardware components can be arranged on one or more printed circuit board assemblies (PCBAs) contained in one or more housing components. The one or more hardware components may be configured or programmed (e.g., using software or computer program code) to perform the various functions described herein in respect of the wireless device 100. In particular implementations, each of the one or more hardware components can be configured to perform, or is for performing, individual or multiple steps of the method described herein in respect of the wireless device 100. The processing circuitry 102 can be configured to run software to perform the method described herein in respect of the wireless device 100. The processing circuitry 102 can thus be implemented in numerous ways, with software and/or hardware, to perform the various functions described herein in respect of the wireless device 100.

Briefly, the processing circuitry 102 of the wireless device 100 is configured to generate a first output on a touch screen interface. The first output comprises a first area of the touch screen and comprises representation of a group of one or more BA. The processing circuitry 102 of the wireless device 100 is configured to obtain first information indicative of a state of the group. The processing circuitry 102 of the wireless device 100 is further configured to configure the first area of the touch screen interface based on the first information. If the first information is indicative that the state of the group meets a first criterion, the processing circuitry 102 of the wireless device 100 is configured to configure the first area in a locked mode. Alteration of the first area via the touch screen interface is prevented (disabled) in the locked mode.

As illustrated in Figure 1, the wireless device 100 may optionally comprise a memory 104. Alternatively, the memory 104 may be external to (e.g., separate to or remote from) the wireless device 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g., connected) to the memory 104. The processing circuitry 102 may be configured to communicate with and/or connect to the memory 104. The memory 104 may be for storing program code or instructions which, when executed by the processing circuitry 102, cause the wireless device 100 to operate in the manner described herein. For example, the memory 104 may be configured to store program code or instructions that can be executed by the processing circuitry 102 to cause the wireless device 100 to operate in accordance with the method described herein in respect of the wireless device 100. Alternatively, or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Figure 1, the wireless device 100 additionally comprises a user interface 106. The user interface 106 is a touch screen interface 106. The touch screen interface 106 may be a multitouch touch screen interface. The touch screen interface 106 may be, for example, a resistive or capacitive touch screen interface. The touch screen interface can be configured to render (e.g., output, display, and/or provide) information required by or resulting from the method described herein. For example, the touch screen interface 106 may be configured to render any information, data, messages, requests, responses, indications, notifications, signals, or similar, that are described herein. The rendering may be referred to as an output of the touch screen interface 106. The touch screen interface 106 is configured to receive a user input. For example, the touch screen interface 106 may allow a user to manually enter information or instructions, interact with, and/or control the wireless device 100. The touch screen interface 106 may be configured to accept and/or recognise any number of touch screen gestures including, tapping, swiping, sliding, pinching (single or multiple finger) gestures. Thus, the touch screen interface 106 is an interface that enables the rendering (or outputting, displaying, or providing) of information and that enables a user to manipulate the rendering and/or information underlying the rendering. For example, the touch screen interface 106 may be configured to display information associated with a BA. The touch screen interface 106 may be configured to display information relating to a group of the one or more BA referred to herein. The touch screen interface 106 may additionally be configured to display information indicative of a state of the group of one or more BA.

The touch screen interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Figure 1, the wireless device 100 may optionally comprise a communications interface (or communications circuitry) 108. The communications interface 108 can be communicatively coupled (e.g., connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the wireless device 100, or components of the wireless device 100 (e.g., the processing circuitry 102, the memory 104, the user interface 106, and/or any other components of the wireless device 100), to communicate with and/or connect to each other and/or one or more other components.

For example, the communications interface 108 may be operable to allow the processing circuitry 102 to communicate with and/or connect to the memory 104 and/or vice versa. Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities (e.g., the one or more BA, the network node, or any other entity of the network) referred to herein whether via the network described herein or otherwise. The communications interface 108 may be operable to allow the processing circuitry 102 to communicate with and/or connect to a cloud server as referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the wireless device 100, or components of the wireless device 100, to communicate and/or connect in any suitable way. For example, the communications interface 108 may enable the wireless device 100, or components of the wireless device 100, to communicate and/or connect wirelessly, via a wired connection, or via any other communication (or data transfer) mechanism. In some wireless implementations, for example, the communications interface 108 may enable the wireless device 100, or components of the wireless device 100, to use radio frequency (RF), Wi-Fi, Bluetooth, or any other wireless communication technology to communicate and/or connect.

Although the wireless device 100 is illustrated in Figure 1 as comprising a single memory 104, it will be appreciated that the wireless device 100 may comprise at least one memory (i.e., a single memory or a plurality of memories) 104 that operate in the manner described herein. Similarly, although the wireless device 100 is illustrated in Figure 1 as comprising a single user interface 106, it will be appreciated that the wireless device 100 may comprise at least one user interface (i.e., a single user interface or a plurality of user interfaces) 106 that operate in the manner described herein. Similarly, although the wireless device 100 is illustrated in Figure 1 as comprising a single communications interface 108, it will be appreciated that the wireless device 100 may comprise at least one communications interface (i.e., a single communications interface or a plurality of communications interfaces) 108 that operate in the manner described herein. It will also be appreciated that Figure 1 only shows the components required to illustrate an embodiment of the wireless device 100 and, in practical implementations, the wireless device 100 may comprise additional or alternative components to those shown.

In some embodiments, the wireless device 100 may comprise the network node described herein. In this way, the wireless device 100 and network node may be part of the same device. In examples in which the wireless device 100 and the network node are comprised in a single device, the wireless device 100 and the network node may share (power, networking, processing, memory etc.) infrastructure. The wireless device 100 and the network node may be mechanically, electrically, and/or otherwise connected together.

**Figure 2** illustrates a schematic view of a system (e.g. network) according to an embodiment. As illustrated in Figure 2, the system can comprise a wireless device 100 as referred to herein, a network node 200 as referred to herein, one or more BA 300 as referred to herein, and a cloud server 400. In the example illustrated in Figure 2, the one or more BA 300 includes a single BA. However, it will be understood that this is merely an example and that the one or more BA 300 can comprise any number (e.g. a plurality) of BA according to other examples.

As illustrated by arrows 210 and 310 of Figure 2, information can be transmitted between the wireless device 100 and the network node 200, and between the network node 200 and the one or more BA 300, respectively. The network node 200 may act as a transceiver to (re)transmit information received from the one or more BA 300. Indeed, as illustrated by arrow 210 of Figure 2, the network node 200 may (re)transmit information received from the one or more BA 300 towards the wireless device 100, and vice versa. The wireless device 100 may thus obtain (e.g., receive) the information (originally obtained from the one or more BA 300) from the network node 200. It will be understood that the information (re)transmitted by the network node 200 to the wireless device 100 may comprise the same information as received by the network node 200 from the one or more BA 300. In some examples, the information (re)transmitted by the network node 200 may be parsed, formatted and/or structured (e.g., by the network node 200) in a different way to that of the information received by the network node 200. For example, the transmission of information as described with reference to arrow 310 of Figure 2 may be performed wirelessly via a radio network, whereas the (re)transmission of information as described with reference to arrow 210 of Figure 2 may be performed wirelessly via a Wi-Fi network. The network node 200 may perform a conversion of the structure of the information received from the one or more BA 300 to a format suitable for (re)transmission to the wireless device 100. It will be understood that the information (e.g., transmitted as described with reference to arrow 210 and/or 310) may be compressed (e.g., in any way) or uncompressed. Compression of the information as received by the network node 200 may be the same or different as any such compression of the information transmitted by the network node 200. In examples in which the information received by the network node 200 from the one or more BA 300 comprises compressed information, the network node 200 may be capable of decompressing and/or recompressing the information for (re)transmission to the wireless device 100. As such, the method discussed herein may comprise the wireless device 100 receiving the information from the one or more BA 300 via the network node 200.

The wireless device 100 (e.g., the processing circuitry 102 of the wireless device 100) may be capable of decompressing, decoding, and/or decrypting the information (e.g., received from the network node 200). It will be understood that the wireless device 100 may additionally be capable of receiving communications (e.g., directly) from the BA 300.

As shown in Figure 2, in some embodiments, the system (e.g. network) referred to herein may comprise a cloud server 400. The cloud server 400 may communicate with the wireless device 100 and/or the network node 200 via the network. In some embodiments, the cloud server 400 can comprise a (e.g. persistent) memory capable of storing information. For example, the cloud server 400 may store a copy of information received by the network node 200 (e.g., from the one or more BA 300). In some embodiments, the cloud server 400 can enable communication between the wireless device 100 and the network node 200 via the cloud server 400 (e.g., even when the wireless device 100 and network node 200 are not proximate to one another). The cloud server 400 referred to herein can be a remote data server (e.g., a centralised data centre). The cloud server 400 referred to herein can be a local data server (e.g., a server deployed at the site of an emergency).

Generally, the wireless device described herein can be used by a user (e.g. an ECO) to monitor and manage an emergency incident in real time. Therefore, in some examples, the method described herein, when performed by the wireless device 100, can be generally applied to the context of monitoring and managing an emergency incident in real time.

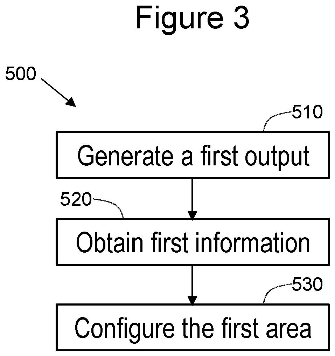

**Figure 3** shows a block diagram 500 illustrating a method for controlling a wireless device 100 according to an embodiment. As illustrated by block 510 of Figure 3, the method includes generating a first output on a touch screen interface 106. The wireless device 100 (e.g. the processing circuitry 102 of the wireless device 100) can be configured to generate the first output. The first output comprises a first area of the touch screen interface 106, and the first area comprises a representation of a group of one or more breathing apparatus. In some examples, the first output may comprise a graphical user interface (GUI). For example, the first output can comprise text, one or more graphical icons, and/or one or more visual indications. The first output can comprise information (e.g. for a user of the wireless device 100). The first output can comprise one or more elements generated on the touch screen interface 106. The one or more elements can be interactive (e.g. such that a user of the wireless device 100 can interact with the one or more elements). As mentioned herein, the first output comprises a first area. The first area may be one of a plurality of areas comprised in the first output. For example, the first output may comprise a plurality of first areas such that each area is associated with a unique group of one or more BA. In some examples, each group of one or more BA may be deployed at the same incident. The first area may correspond to a window of the first output. As such, in some examples, the plurality of first areas may correspond to a plurality of windows of the first output.

As illustrated by block 520 of Figure 3, the method includes obtaining first information indicative of a state of the group. The wireless device 100 (e.g. the processing circuitry 102 of the wireless device 100) can be configured to obtain the first information (e.g. via the user interface 106 and/or the communications interface 108 of the wireless device 100). The state of the group can be indicative of a status of the group of one or more BA. As mentioned herein, in some examples, the state of the group can correspond to a standby state of the group, a finished state of the group, or an active state of the group. A standby state of the group may be a state in which the group of one or more BA is not attending an incident. For example, the group of one or more BA may be in a standby state before entering an incident, such as a building fire. The standby state can correspond to a preparation stage of the group of one or more BA (e.g. immediately after switching on the one or more BA). For example, in the standby state, the group of one or more BA may not yet have received instructions to (e.g. actively) attend the incident. A finished state of the group may be a state in which the group of one or more BA has (e.g. recently) finished attending an incident. For example, the group of one or more BA may be in a finished state after exiting (e.g. evacuating) an incident. As such, a finished state may correspond to a stage in which the incident is resolved.

The active state may be a state in which the group of one or more BA are actively involved in the incident. For example, the active state can comprise an entering incident state, an at incident state, and/or a retreating state. The entering incident state may be understood to mean a state in which the group of one or more BA is proceeding to enter and/or attend an incident. The at incident state may be understood to mean a state in which a group of breathing apparatus is actively attending, responding to, and/or managing an incident. The retreating state may be understood to mean a state in which the group of one or more BA is proceeding to withdraw (e.g. retreat) from an incident.

As illustrated by block 530 of Figure 3, the method includes configuring the first area of the touch screen interface 106 based on the first information. The wireless device 100 (e.g. the processing circuitry 102 of the wireless device 100) can be configured to configure the first area. Configuring the first area comprises, if the first information is indicative that the state of the group meets a first criterion, configuring the first area in a locked mode. Alteration of the first area via the touch screen interface 106 is prevented (disabled) in the locked mode. In some examples, a user may not be able to change the (e.g. one or more elements comprised in the) first area when the first area is configured in the locked mode.

The method performed by the wireless device 100 may comprise an initial or preliminary step of "starting" an incident - meaning starting to monitor an incident in real time. It will therefore be appreciated that the method performed by the wireless device 100 may comprise a final or subsequent step of "finishing" an incident - meaning ceasing to monitor an incident. The step of "finishing" an incident, as it relates to the present invention, will be discussed below.

While Figure 3 shows one particular embodiment of the method disclosed herein, it will be appreciated that alternative embodiments are also applicable. For example, embodiments with additional or alternative steps and/or with steps in alternative orders are also applicable (unless explicitly excluded).

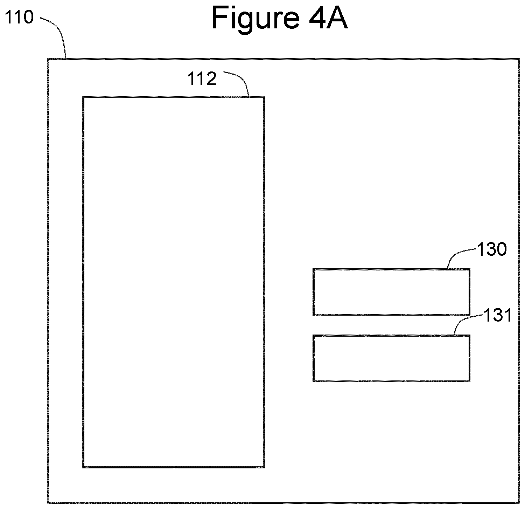

**Figures 4A-4E** show one example of an output of the touch screen interface 106 of the wireless device 100. Starting at **Figure 4A**, a first output 110 is shown. The first output 110 is generated (e.g., displayed) on the touch screen interface 106. The first output 110 can be generated on the touch screen interface 106 such that a user of the wireless device 100 (e.g., an ECO) is able to perceive it. As illustrated in Figure 4A, the first output 110 comprises a first area 112. The first area 112 can correspond to a window comprised, for example, within the first output 110. As illustrated in Figure 4A, in some examples, the first output 110 may include one or more user blocks 130, 131. Each user block of the one or more user blocks 130, 131 can represent a BA (e.g. worn by a wearer of the BA). In the example illustrated in Figure 4A, the one or more user blocks 130, 131 are unassigned (e.g. to any team). In some examples, the first output 110 can comprise a second area which comprises one or more unassigned user blocks (e.g. the user blocks 130, 131 of the example illustrated in Figure 4A). The second area may be referred to herein as a standby area.

In some examples, the wireless device 100 may receive second information from the one or more BA 300 (e.g. via the network node 200 referred to herein). The second information can be indicative that the one or more BA are within range of the wireless device 100 and/or the network node 200. The wireless device 100 can generate the one or more user blocks 130, 131 in response to receiving the second information. Therefore, in some examples, when the wireless device 100 is active, any BA which is powered on in the vicinity of the wireless device 100 may automatically be recognised by the wireless device 100 and a user block representing the BA may be added to the first output 110 such that a user of the wireless device 100 (e.g. ECO) can see the BA has been detected. In some examples, the user of the wireless device 100 may manually create a user block to represent a BA which is not automatically added to the first output 110.

The user of the wireless device 100 (e.g. ECO) may assign a user block of the one or more of the user blocks 130, 131 to a group (e.g. team). For example, in order to safely manage an incident, an ECO may choose to assign a user block corresponding to a particular BA (e.g. and a particular corresponding firefighter) to a particular firefighter team. In this way, information about each of the one or more BA 300 can be quickly viewed and/or edited using the wireless device 100. It will be appreciated that the user (e.g., ECO) may choose to assign the one or more user blocks 130, 131 to a group to mirror (i.e., correspond to) a physical team to which the one or more BA 300 corresponding to the one or more user blocks 130, 131, are allocated. For example, three firefighters wearing first, second, and third BA may be assigned to the same group via the touch screen interface 106 and may respond to emergency incidents as a team. A user of the wireless device 100 (e.g. ECO) may therefore assign user blocks using the wireless device 100 such that the real grouping of the associated (e.g. wearers of the) BA is virtually represented via the touch screen interface 106. It will be appreciated that as a wearer of a BA will generally be wearing their BA, each user block representing each BA can be analogous to each user block representing each wearer of the BA.

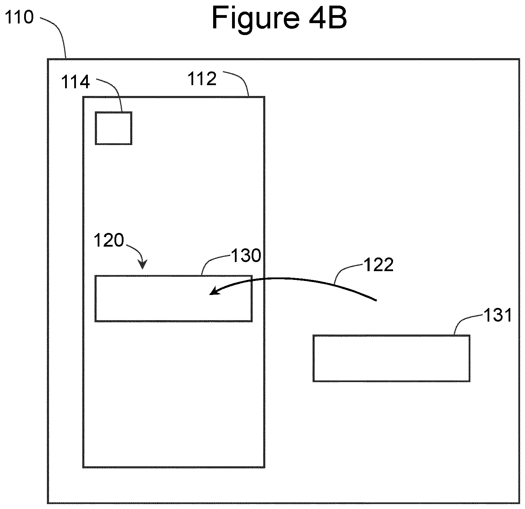

**Figure 4B** illustrates an example of the first output 110 of the touch screen interface 106. As illustrated in Figure 4B, in some examples, the first area 112 can comprise a first control 114. The control can correspond to a window comprised (e.g. within) the first area 112. It will be understood that Figure 4B is merely an example, and that the first control 114 may be comprised in any part of the first output 110 according to other examples. Figure 4B illustrates an example way in which the first area 112 can comprise a representation 120 of a group of one or more BA 300. For example, Figure 4B illustrates an example way in which a BA may be assigned to a group via the (e.g. touch screen interface 106 of the) wireless device 100.

As illustrated by arrow 122 of Figure 4B, the wireless device 100 may receive a touch screen interface 106 input. As also illustrated by arrow 122 of Figure 4B, the touch screen interface 106 input can correspond to a swipe and/or slide gesture. The swipe and/or slide gesture may be initiated by a user touching the area of the touch screen interface 106 corresponding to a first user block 130 (representing a BA) of the one or more user blocks 130, 131 on the right side of the touch screen interface 106 (e.g. corresponding to the second area referred to herein), and swiping and/or sliding the first user block 130 to the first area 112 on the left side of the touch screen interface 106. Based on the input as described with reference to arrow 122 of Figure 4B, the wireless device 100 (e.g. the processing circuitry 102 of the wireless device 100) can determine that a user intends to add the BA 300 represented by the first user block 130 to a group of one or more BA. The wireless device 100 may (re)generate the first output 110 (of touch screen interface 106) to include a first area 112 which comprises a representation 120 of the (e.g. newly created) group of one or more BA 300. The first area 112 of the (re)generated first output 110 can include the first user block 130, thereby representing the alteration to the group. Therefore, in some examples, the representation of the group of one or more BA 300, as referred to herein, can comprise one or more (e.g. a list of) user blocks comprised in the first area 112. As such, a user can drag and drop a user block such that the user block is placed in the first area 112. It will be understood that where a user gestures to add a user block to an existing group, the first output 110 will not necessarily be (re)generated to include a new area, but will instead be updated to show the user block inside an existing area representing the existing group. It will also be understood that, in some examples, the first user block 130 may be removed (e.g. unassigned) from the first area 112 in response to receiving a touch screen interface input that corresponds to a reversal of the touch screen interface 106 input as described with reference to arrow 122 of Figure 4B.

In the examples illustrated in Figures 4A-4C, the first area can be said to be configured in the unlocked mode, as defined herein. In the unlocked mode, alteration of the first area 112 (e.g. adding and/or removing user blocks to and/or from the first area 112 respectively) is enabled. In some examples, the wireless device 100 may configure the first area 112 in the unlocked mode by default (e.g. in response to being switched on). In some examples, the wireless device 100 may only configure the first area 112 in the locked mode in response to obtaining first information indicative that the state of the group of one or more BA 300 meets the first criterion, as defined herein.

Each user block of the one or more user blocks 130, 131 may include information indicative of a respective BA of the one or more BA 300 to which the user block corresponds. Alternatively, or in addition, each use block may comprise information indicative of a wearer of the respective BA. For example, each user block may comprise information indicative of the name and/or identifier of the wearer of the respective BA, an identifier of the respective BA, a value corresponding to an estimated or measured remaining air supply of the respective BA, and/or a countdown timer displaying the time until the wearer of the respective BA must retreat from an incident. The information included in a user block may be displayed in the area of the first output 110 corresponding to the user block. For example, the information included in a user block may be displayed within a rectangular area corresponding to the user block, as illustrated in Figure 4B.

In some examples, the wireless device 100 may impose a limit on the number of groups and/or the number of user blocks within groups which can be represented. For example, in some embodiments, the wireless device 100 (via the processing circuitry 102) may set an upper limit of 24 user blocks that can be displayed in the first area 112. In some embodiments, the wireless device 100 (via the processing circuitry 102) may set an upper limit of six groups of one or more BA that can be displayed in the first area 112. In other embodiments, no such limits may apply.

The first area 112 may include additional information about the group (e.g., metadata), which is displayed in relation to (e.g., in or around) the first area 112. The additional information may include, for example, a group name and/or a group state.

The first area 112 may additionally or alternatively include controls for allowing a user of the wireless device 100 (e.g. an ECO) to modify the representation 120 of the group. Such controls may enable the user to control (e.g. insert and/or edit) a group name and/or a group state. The controls may enable the user to send a notification and/or message to each BA wearer represented by the user blocks assigned to the group. The controls may enable the user to sound an alarm, receivable by each BA represented by the user blocks assigned to the group. In some embodiments, the controls may allow entry of information, whereas in other embodiments, the controls may impose a limit on the type and/or size of the data that can be entered.

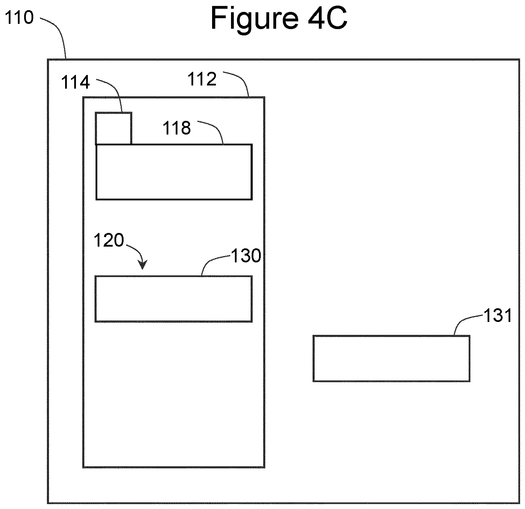

In some examples, the first control 114 can be used to modify the state of the group of one or more BA 300. In some examples, the first control 114 can be a (e.g. touch screen interface 106) button. The first control 114 may include (e.g. display) information (e.g. within the area of the first output 110 corresponding to the first control 114). The information included in the first control 114 may be indicative of a state of the group of one or more BA 300. A user may interact with the first control 114 via the touch screen interface 106. For example, in response to receiving a touch screen interface 106 input associated with the first control 114 (e.g. a tapping of the first control 114 button), the wireless device 100 may display (e.g. show) a dropdown menu 118 as illustrated in **Figure 4C****.** The dropdown menu 118 may comprise one or more options corresponding to various possible states of the group of one or more BA 300. As described herein, the wireless device 100 obtains first information indicative of the state of the group. In some examples, obtaining the first information can comprise obtaining the first information from a user input received via the touch screen interface 106. In some examples, the first information can be obtained via a selection of a state comprised in the dropdown menu 118. The options comprised in the dropdown menu 118 may include any one or more of the states of the group of one or more BA 300 referred to herein. For example, the dropdown menu 119 may include "standby", corresponding to a standby state of the group, "finished", corresponding to a finished state of the group, and/or "active" corresponding to an active state of the group. The options may alternatively or additionally include "entering", corresponding to a state in which the group of firefighters are entering an emergency incident, "at incident", corresponding to a state in which the group of firefighters are actively responding to an emergency incident, and/or "retreating", corresponding to a state in which the group of firefighters are retreating from an emergency incident. In some embodiments, the "entering", "at incident" and "retreating" options may be provided instead of the "active" option. In some embodiments, the "entering", "at incident" and "retreating" options may be categorised as sub-options within the "active" option.

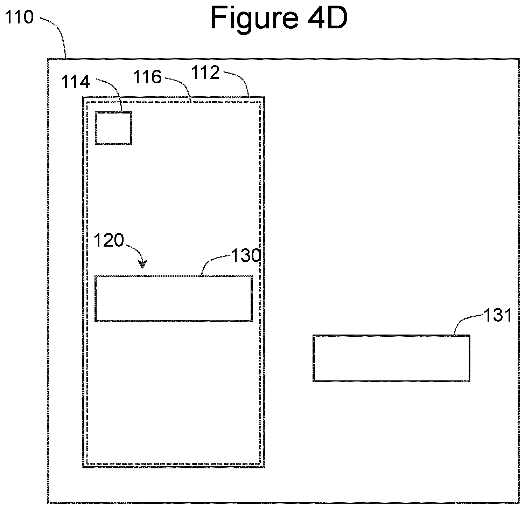

**Figure 4D** illustrates an example of the first output 110 of the touch screen interface 106. In the example illustrated in Figure 4D, the wireless device 100 has obtained first information indicative of the state of the group. For example, in Figure 4D, a user (e.g., ECO) may have selected a state of the group (e.g. using the first control 114). The first information may be received via the first control 114 as described herein. In some examples, in response to obtaining the first information, the wireless device 100 may determine whether the state of the group corresponds to an "active" state, a "standby" state, or a "finished" state. As described above, the "entering", "at incident" and "retreating" options may be determined, by the wireless device 100, to correspond to an "active" state of the group.

In some examples, the wireless device 100 may determine whether the information meets a first criterion, as defined herein. As described herein, in some examples, the first criterion can be met if the state of the group corresponds to the active state, as defined herein.

In the example shown in Figure 4D, the first information is indicative that the state of the group corresponds to the active state of the group. For example, a user (e.g. ECO) may have chosen an "active" state for the group using the first control 114. The wireless device 100 therefore determines that the first information meets the first criterion (as the state is the active state). As a result of the first criterion being met, the wireless device 100 configures the first area 112 in a locked mode in which alteration of the first area 112 via the touch screen interface 106 is prevented (disabled).

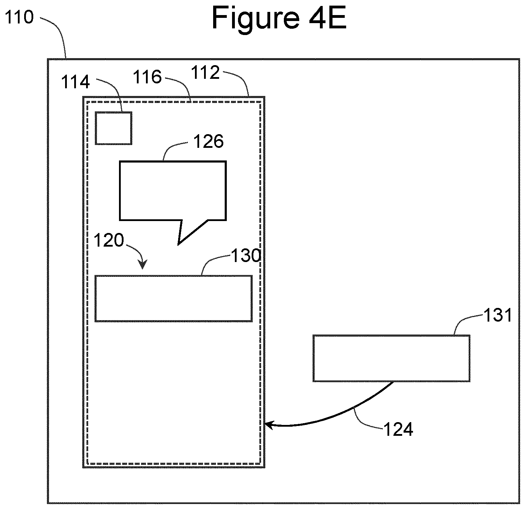

In some examples, such as that illustrated in Figures 4D and 4E, the wireless device 100 may generate a second output 116 on the touch screen interface 106. As illustrated in Figure 4E, in some examples, the second output 116 can be comprised in the first output 110. The second output 116 can indicate a current mode of the first area 112. For example, if the first area 112 is configured in the locked mode (e.g. as a result of a user of the wireless device 100 (e.g. an ECO) assigning an active state to the group), the second output 116 may indicate that the current mode of the first area 112 is the locked mode. As illustrated in Figure 4E, in some examples, the second output 116 can comprise a dashed outline of the first area 112. It will be appreciated, however, that the second output could comprise other elements. For example, the second output 116 can comprise text, colour, patterns, etc. In some embodiments, the second output 116 may not be comprised in the first output 110. For example, the second output 116 may be comprised in a different section of the first output 110.

In the locked mode, at least a portion of the first area 112 on the touch screen interface 106 may be disabled. For example, in the locked mode, a portion of the first area 112 of the touch screen interface 106 may be disabled such that touch inputs in the portion of the first area 112 of the touch screen interface 106 are ignored (e.g. by the wireless device 100). Reference to disabling of the touch screen interface will be understood to refer generally to a software-implemented disablement, however electrical and/or mechanical disablement means are also applicable.

In the examples shown in Figures 4A-4E, the first area 112 being configured in the locked mode can mean that only touch screen inputs relating to at least a portion of the first area 112 are ignored. In some examples, while the first area 112 may in general ignore touch screen inputs, some areas of the first area 112 may still be responsive. For example, any controls, such as the first control 114 of the first area 112 may still be responsive to touch screen inputs, even in the locked mode.

**Figure 4E** illustrates an example of the first output 110 of the touch screen interface 106. In the example illustrated in Figure 4E, the first area 112 can be said to be configured in the locked mode (e.g. as indicate by the second output 116). As illustrated by arrow 124 of Figure 4E, the wireless device 100 may receive a touch screen interface 106 input associated with the first area 112. The touch screen interface 106 input can correspond to, for example, a user (e.g. ECO) attempting to move (e.g. drag and drop) a second user block 131 of the one or more user blocks 130, 131 (e.g. which is not currently assigned to the group of one or more BA 300), to the first area 112 whilst the first area 112 is configured in the locked mode. In such a scenario, the wireless device 100 may identify the touch screen interface 106 input (e.g. ECO's drag gesture) and determine that a user is attempting to add the second user block 131 to the first area 112. As mentioned herein, alteration of the first area 112 via the touch screen interface 106 is prevented in the locked mode. As such, the wireless device 100 can prevent the first area 112 from being altered (e.g. modified). In the example illustrated in Figure 4E, the wireless device can prevent the second user block 131 from being added to the first area 112.

In some examples, including the example shown in Figure 4E, if the first area 112 is configured in the locked mode, generating the second output, as referred to herein, can comprise generating a notification 126 in response to receiving a touch screen interface 106 input associated with the first area 112 (e.g. as described with reference to arrow 124 of Figure 4E). The notification 126 can be indicative that the first area 112 is configured in the locked mode. The notification 126 may include text and/or a graphic (e.g. symbols) which indicate that the first area 112 is in the locked mode. In the example illustrated in Figure 4E, the notification 126 can indicate that the user block 131 cannot be added to the first area 112. In some examples, the notification 126 may include a (e.g. closed) padlock symbol. The notification 126 may additionally or alternatively include a blurred layer which at least partially obscures the (e.g. contents of the) first area 112. In some examples, the notification 126 may overlay other content of the first area 112 and/or the first output 110. In this way, the prominence of the notification 126 is enhanced.

It will be appreciated that when the first area 112 is in the locked mode, the wireless device 100 may prevent a user of the wireless device 100 (e.g. an ECO) from modifying the first area 112, for example, by attempting to remove a user block from the first area 112. In this way, alteration of the first area 112, through either increasing or decreasing the number of user blocks assigned to the first area 112, can be prevented.

In some examples, the wireless device 100 may prevent a user (e.g. an ECO) from being able to conclude or finish an incident being monitored (e.g. in real time) by the wireless device 100 if the state of the group of one or more BA 300 does not correspond to the finished state, as defined herein. By preventing the incident from being "finished" before all groups have a "finished" state, the likelihood of accidently finishing an incident while firefighters are still responding to the incident is greatly reduced.

It will be understood that where the information indicative of the state of the group does not meet the first criterion, the first area 112 may not be configured in the locked mode, but may rather be configured in an unlocked mode. In some examples, in the unlocked mode, a user of the wireless device 100 (e.g. an ECO) can freely add and/or remove user blocks to and/or from the first area 112, respectively. As such, in some examples, the representation 120 of the group of one or more BA can be altered (e.g. by a user) via the touch screen interface 106 if the first area 112 is configured in the unlocked mode.

In some embodiments, after obtaining the first information, as defined herein, the wireless device 100 may initiate transmission of the first information towards the network node 200, as referred to herein (e.g. via the network). The network node 200 may store the first information in a memory of the network node 200, which may allow other wireless devices of the network to access the first information. The first information may be transmitted as part of a first message. In some examples, the first message can comprise a request for the network node 200 to store the first information (e.g. in the memory of the network node 200).

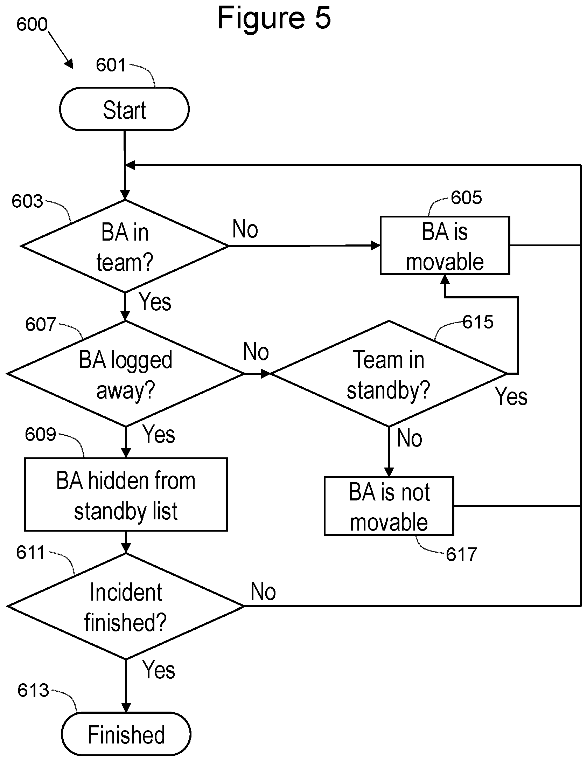

**Figure 5** is a flow chart illustrating process 600 in a further example of a method for controlling a wireless device 100. The steps of the process 600 of Figure 5 illustrate example ways in which the steps of the method, as described with reference to Figure 3, may be implemented and supplemented in order to achieve the above discussed and additional functionality.

In particular, the exemplary process 600 shown in Figure 5 can be performed by the processing circuitry 102 of the wireless device 100 to control (e.g., and modify) the first output 110 of the touch screen interface 106. As illustrated by block 601 of Figure 5, the process 600 may begin. In some examples, the process 600 may begin in response to a user powering on the wireless device 100 and/or in response to a user interacting with the wireless device 100 (e.g. so as to cause the process 600 to begin). In some examples, any BA which is connected to the wireless device 100 after it is powered on may automatically be represented by a user block in the second (e.g. 'ungrouped') area of the first output 110, as defined herein. As described herein, the wireless device 100 may configure the first area 112, as defined herein, in the unlocked mode in response to powering on.

The process may proceed to block 603 of Figure 5. As illustrated by block 603 of Figure 5, the wireless device 100 (e.g. the processing circuitry 102 of the wireless device 100) may determine whether a user block (e.g. of the one or more user blocks 130, 131) representing a BA of the one or more BA associated with the wireless device 100 (e.g., identified as being powered on and in range of the network and/or manually added by a user of the wireless device 100) is assigned to a group (team).

If the wireless device 100 (e.g. the processing circuitry 102 of the wireless device 100) determines that the user block is not assigned to a group, the process 600 may proceed to block 605 of Figure 5. As illustrated by block 605 of Figure 5, in some examples, the wireless device 100 (e.g. the processing circuitry 102 of the wireless device 100) may determine that the user block is not assigned to a group, and permit a user (e.g., an ECO) to move the user block into a group using the touch screen interface 106. For example, the wireless device 100 may permit the user to drag and drop the user block into the first area 112, as defined herein. As illustrated in Figure 5, the process 600 may then proceed (e.g. return) to block 603 of Figure 5.

By configuring the first area 112 in the unlocked mode, the process 600 may enable the user of the wireless device 100 to organise BA under their management (e.g. as represented by one or more user blocks 130, 131).

If the wireless device 100 (e.g. the processing circuitry 102 of the wireless device 100) determines that the user block is assigned to a group, the process may proceed to block 607 of Figure 5. As illustrated by block 607 of Figure 5, the wireless device 100 (e.g. the processing circuitry 102 of the wireless device 100) may determine whether the BA represented by the user bock has recently disconnected (e.g. "logged away") from the wireless device 100 (e.g., because the BA connected to a different network node to that of the wireless device 100 and/or the BA connected to a different wireless device 100).

If the wireless device 100 (e.g. the processing circuitry 102 of the wireless device 100) determines that the BA represented by the user block has recently disconnected from the wireless device 100, then the process 600 may proceed to block 609 of Figure 5. As illustrated by block 609 of Figure 5, in some examples, the wireless device 100 (e.g. the processing circuitry 102 of the wireless device 100) may (re)generate the first output 110 such that the user block is no longer displayed by the touch screen interface 106. Therefore, if the wireless device 100 (e.g. the processing circuitry 102 of the wireless device 100) determines that the BA represented by the user block has recently disconnected from the wireless device 100, the wireless device 100 may prevent the user from being able to interact with the user block as the user block is hidden and/or removed from the first output 110.

By hiding and/or removing a user block from the first output 110, the process 600 may prevent a user of the wireless device 100 from inadvertently attempting to manage a BA no longer under their control (e.g., because it is logged off or because it is under the control of a different wireless device 100). It will equally be understood that the process 600 may prevent a user of a different wireless device 100 from inadvertently attempting to manage a BA that is connected to the wireless device 100. Thus, the process 600 may provide enhanced accountability for a user of the wireless device 100.

In some embodiments, instead of hiding and/or removing a user block from the first output 110 when a BA is determined to be logged away, the wireless device 100 may continue to display the user block. The wireless device 100 may continue to display the user block provided that the user block has not been assigned to a group by a different wireless device. The wireless device 100 may hide and/or remove the user block if it determines that a corresponding user block displayed by a different wireless device has been assigned to a group by the different wireless device.

In some embodiments, at block 607 of Figure 5 the wireless device 100 may additionally or alternatively determine whether the BA represented by the user bock has disconnected due to being logged off (e.g., powered down and/or disconnected from any network node 200). If the wireless device 100 determines that the BA has been logged off, the wireless device 100 may (re)generate the first output 110 to modify the user block representing the BA. The user block may be modified to indicate that the BA it represents has been logged off. For example, the user block may be modified to appear in greyscale (e.g., rather than colour), to indicate that the BA has been logged off. The wireless device 100 may additionally or alternatively prevent interaction with the user block (e.g., via the touch screen interface 106) when it is determined that the BA has been logged off.

As illustrated in Figure 5, the process 600 may then proceed to block 611 of Figure 5. As illustrated by block 611 of Figure 5, the wireless device 100 (e.g. the processing circuitry 102 of the wireless device 100) may determine whether the incident represented by the first output 110 and being managed by the user of the wireless device 100 is finished. The incident may be finished if a user has manually assigned a finished state to the incident and/or if one or more criteria have been met that mean an incident is automatically assigned a finished state. For example, if all groups being managed by the wireless device 100 are assigned a finished state, then the incident may automatically be deemed to be finished. In the same regard, in some examples the process 600 may prevent the user from finishing an incident if not all of the groups are assigned a finished state.

If the wireless device 100 (e.g. the processing circuitry 102 of the wireless device 100) determines that the incident has finished, the process 600 may proceed to block 613 of Figure 5. As illustrated by block 613 of Figure 5, the process 600 may end (terminate). Ending the process may include logging off and/or shutting down the wireless device 100.

As illustrated by block 607 of Figure 5, if the wireless device 100 (e.g. the processing circuitry 102 of the wireless device 100) determines that the BA represented by the user block 130, 131 still has an active connection to the wireless device 100 and/or is still under the control of the wireless device 100, then the process 600 may proceed to block 615 of Figure 5.

As illustrated by block 615 of Figure 5, the wireless device 100 (e.g. the processing circuitry 102 of the wireless device 100) may determine the state of the group to which the user block is assigned. If the wireless device 100 (e.g. the processing circuitry 102 of the wireless device 100) determines that the group is assigned a standby state, then the process 600 may proceed to block 605 of Figure 5. As illustrated by block 605 of Figure 5, in some examples, if the wireless device 100 (e.g. the processing circuitry 102 of the wireless device 100) determines that the user block is assigned to a group that is assigned a standby state, the wireless device 100 may permit a user (e.g., an ECO) to move the user block out of the group or into another group using the touch screen interface 106. Notably, in some examples, the wireless device 100 may additionally or alternatively permit a user to move the user block out of a group and/or into another group when the group is assigned a finished state. The process 600 may then proceed (e.g. return) to block 603 of Figure 5.

As mentioned above, by configuring the first area 112 in the unlocked mode, the user of the wireless device 100 is able to organise BA under their management (e.g., as represented by user blocks). As described above, the process 600 may impose a limit on the number of different groups that can exist and/or be displayed at once (e.g., in the first output 110). In some examples, the limit may be an upper limit of up to six groups. The process 600 may additionally or alternatively impose a limit on the number of user blocks that can exist and/or be displayed at once (e.g., in the first output 110). In some examples, the limit may be an upper limit of up to 24 user blocks (e.g. representing 24 different BA).

As illustrated by block 615 of Figure 5, if the wireless device 100 (e.g. the processing circuitry 102 of the wireless device) determines that the group, to which the user block is assigned, has a state other than a standby state (or in some embodiments, a standby or finished state as described above), then the process 600 may proceed to block 617 of Figure 5. As illustrated by block 617 of Figure 5, the wireless device 100 (e.g. the processing circuitry 102 of the wireless device 100) may configure the first area 112 of the first output 110 in the locked mode. Therefore, if the wireless device 100 (e.g. the processing circuitry 102 of the wireless device 100) determines that the user block is assigned to a group that is assigned a state other than a standby state (or a standby or finished state), the wireless device 100 may prevent a user (e.g., an ECO) from moving the user block out of the group and/or into another group using the touch screen interface 106. The process 600 may then proceed (e.g. return) to block 603 of Figure 5. In some examples, the user of the wireless device 100 may be able to update the state of each group at any time. Therefore, the process may return to block 603 to ensure that any changes in state are recognised.

By configuring the first area 112 in the locked mode, the user of the wireless device 100 is prevented from being able to move a user block, which represents a BA (e.g. and thus a firefighter using the BA), out of the group to which it is assigned. Therefore, the user (e.g., an ECO) is prevented from accidentally making an unintentional change. The user is also relieved of having to remember which BA (and therefore BA users/firefighters) is in which group and the state of each group.

It will be appreciated that the process 600 may be a cyclical process which is continuously repeated until the incident being managed by the wireless device 100 is deemed to be finished.

There is also provided a computer program comprising instructions which, when executed by processing circuitry (such as the processing circuitry 102 of the wireless device 100 described herein), cause the processing circuitry to perform at least part of the method described herein. There is provided a computer program product, embodied on a non-transitory machine-readable medium, comprising instructions which are executable by processing circuitry (such as the processing circuitry 102 of the wireless device 100 described herein) to cause the processing circuitry to perform at least part of the method described herein. There is provided a computer program product comprising a carrier containing instructions for causing processing circuitry (such as the processing circuitry 102 of the wireless device 100 described herein) to perform at least part of the method described herein. In some embodiments, the carrier can be any one of an electronic signal, an optical signal, an electromagnetic signal, an electrical signal, a radio signal, a microwave signal, or a computer-readable storage medium.

The techniques described herein facilitate the improved control of a wireless device. Indeed, the techniques described herein provide for rapid organisation of BA while also ensuring responsibility is maintained for a user of the wireless device. By preventing the user (e.g., ECO) from modifying a group (e.g., adding or removing a BA to or from the group) while the group is in an active state, the risk of inaccurately recording the state of each firefighter is greatly reduced. The present invention therefore improves the safety of firefighters by ensuring their recorded state cannot be changed while they are actively responding to an emergency. This reduces the possibility that the status of a firefighter who is actively responding to an emergency could be incorrectly modified to indicate that the firefighter is, for example, on standby. It will be appreciated that this situation would have potentially catastrophic consequences if a firefighter was believed to be on standby, while they were actually involved in an emergency response incident. As firefighters generally operate in groups, the method of the present invention ensures that firefighters in a group cannot be modified when the group has an active state. Moreover, the techniques described herein are simpler to operate than existing analogue (e.g. paper) systems.

It will be appreciated by those skilled in the art that although the invention has been described by way of example, with reference to one or more exemplary examples, it is not limited to the disclosed examples and that alternative examples could be constructed without departing from the scope of the invention as defined by the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for controlling a wireless device (100) of a network, wherein the wireless device (100) comprises a touch screen interface (106) the method comprising:
generating (510) a first output (110) on the touch screen interface (106), wherein the first output (110) comprises a first area (112) of the touch screen interface (106), and wherein the first area (112) comprises a representation (120) of a group of one or more breathing apparatus (300);
obtaining (520) first information indicative of a state of the group; and
configuring (530) the first area (112) of the touch screen interface (106) based on the first information, wherein configuring the first area (112) comprises:
if the first information is indicative that the state of the group meets a first criterion, configuring the first area (112) in a locked mode, wherein alteration of the first area (112) via the touch screen interface (106) is prevented in the locked mode.

2. The method as claimed claim 1, wherein configuring (530) the first area (112) comprises:
if the first information is indicative that the state of the group does not meet the first criterion, configuring the first area (112) in an unlocked mode, wherein alteration of the first area (112) via the touch screen interface (106) is enabled in the unlocked mode.

3. The method as claimed in any preceding claim, wherein alteration of the first area (112) via the touch screen interface (106) comprises altering the representation (120) of the group of one or more breathing apparatus (300) comprised in the first area (112).

4. The method as claimed in claim 3, wherein altering the representation (120) of the group of one or more breathing apparatus (300) comprised in the first area (112) comprises:
altering a number of one or more user blocks (130) comprised in the first area (112), wherein each user block (130) of the one or more user blocks corresponds to a breathing apparatus (300) of the group of one or more breathing apparatus.

5. The method as claimed in any preceding claim, wherein the state of the group corresponds to:
a standby state of the group;
a finished state of the group; or
an active state of the group.

6. The method as claimed in claim 5, wherein the first criterion is not met if the state of the group corresponds to:
the standby state; or
the finished state.

7. The method as claimed in claim 5 or 6, wherein the first criterion is met if the state of the group corresponds to:
the active state.

8. The method as claimed in any preceding claim, wherein obtaining (520) the first information comprises:
obtaining the first information from a user input received via the touch screen interface (106).

9. The method as claimed in any preceding claim, the method comprising:
generating a second output (116) on the touch screen interface (106), wherein the second output (116) is indicative of the mode of the first area (112).

10. The method as claimed in claim 9, wherein, if the first area (112) is configured in the locked mode, generating the second output (116) comprises:
in response to receiving a touch screen interface (106) input (124) associated with the first area (112), generating a notification (126) indicative that the first area (112) is configured in the locked mode.

11. The method as claimed in any preceding claim, the method comprising:
initiating transmission of the first information towards a node (200) of the network.

12. The method as claimed in claim 11, wherein the node (200) is configured to operate as a transceiver between the wireless device (100) and the one or more breathing apparatus (300).

13. The method as claimed in any preceding claim, wherein:
the one or more breathing apparatus (300) are deployed at an emergency response incident; and/or
the wireless device (100) is deployed at the emergency response incident.

14. A wireless device (100) comprising:
a touch screen interface (106); and
processing circuitry (102) configured to operate in accordance with the method of any of the preceding claims.

15. A computer program product, embodied on a non-transitory machine-readable medium, comprising instructions which are executable by processing circuitry (102) to cause the processing circuitry to perform the method according to any of claims 1-13.
